# EUROPEAN PATENT APPLICATION

(11) **EP 4 786 523 A1**
(43) Date of publication of application: **05.08.2026**
(21) Application number: 26153407.7
(22) Date of filing: 22.01.2026
(51) Int. Cl.: C08G 73/10, C08G 73/12

(54) **HEAT-CURABLE MALEIMIDE RESIN COMPOSITION, AND BONDING FILM, BUILD- UP FILM, RESIN-COATED COPPER FOIL, PREPREG, AND LAMINATE, AND PRINTED WIRING BOARD USING THEM**

(30) Priority: 04.02.2025 JP 2025016894
(71) Applicant: SHIN-ETSU CHEMICAL CO., LTD.,, Chiyoda-ku, Tokyo 1000005 (JP)
(72) Inventor: Tsutsumi, Yoshihiro, Annaka-shi, 3790224 (JP); Hosokawa, Daiki, Annaka-shi, 3790224 (JP); Kudo, Shunsuke, Annaka-shi, 3790224 (JP)
(74) Representative: Angerhausen, Christoph

(57) **Abstract**

A heat-curable maleimide resin composition is provided that gives a cured product having low relative permittivity, low dielectric loss tangent, and excellent bonding properties. The heat-curable maleimide resin composition includes (A) a maleimide resin solid at 25°C, (B) an epoxy resin containing two or more epoxy groups in one molecule, (C) an anionic polymerization initiator, and (D) a hollow inorganic filler.

## Description

### BACKGROUND OF THE INVENTION

### Field of the Invention

The present invention relates to a heat-curable maleimide resin composition.

### Background Art

In recent years, the next-generation communication system called 5G (26 to 80 GHz millimeter wave band) has become popular, and the development of the next-next-generation communication system called 6G has started. In order to realize communication systems of higher speed, larger capacity, and reduced communication delay than the current levels, materials for high frequency bands of 3 to 80 GHz are required, and low transmission loss is essential as a countermeasure against noise. The transmission loss is the sum of conductor loss and dielectric loss. Reducing the conductor loss requires low surface roughness of metal foils that are used, in particular, copper foils. On the other hand, the dielectric loss is proportional to the product of the square root of relative permittivity, multiplied by the dielectric loss tangent. Thus, insulating materials of excellent dielectric properties (low relative permittivity and low dielectric loss tangent) are to be developed. In particular, insulating materials for board applications are required to be superior in such dielectric properties. Materials known as reactive polyphenylene ether resins (PPE) are increasingly used for rigid boards. Materials called liquid crystal polymers (LCP) and modified polyimides (MPI) are increasingly used for flexible printed circuit (FPC) boards.

On the other hand, it has been reported that a maleimide compound substantially having a dimer diamine frame (hereinafter, such compounds are referred to as "special maleimide compounds") is used as the main resin for boards (see WO-A-2016-114287 and JP-A-2018-201024). In contrast to conventional maleimide resins, the special maleimide compounds are low in glass transition temperature (Tg) and high in coefficient of thermal expansion (CTE). In spite of these facts, such special maleimide compounds have been extensively researched and developed because of the numerous advantages they offer. For example, compared to the existing heat-curable resins, special maleimide compounds are highly excellent in dielectric properties, have flexible properties, outperform epoxy resins in adhesion to metals or the like, and can be built up (high) into a multilayer structure utilizing the heat-curable properties of the resins.

On the other hand, it has been reported that special maleimide compounds are combined with other high-Tg aromatic maleimide compounds from the point of view of board dimensional stability (WO-A-2016-114286, JP-A-2018-12764, and JP-A-2018-12772). However, aromatic maleimide compounds tend to be inferior in dielectric properties in the 28 GHz and higher millimeter wave band, and are also prone to absorb moisture. Furthermore, aromatic maleimide compounds are poor in compatibility, causing problems, such as easy occurrence of separation in cured products, and nonuniform quality. To solve this, studies have recently shown that a high glass transition temperature Tg of a special maleimide compound itself can be achieved by a maleimide compound that has a diamine other than dimer diamines (see JP-A-2019-203122). Furthermore, combining multiple types of special maleimide compounds gives a well-balanced composition (see JP-A-2023-67339 and JP-A-2023-67340).

In common practice, these compositions are further combined with inorganic fillers, such as silica, to reduce CTE and dielectric loss tangent. However, inorganic fillers, such as silica, have high relative permittivity, partly because they are oxides. Thus, silica-containing compositions have an increased value of relative permittivity and will not qualify for use in the future high-speed communication applications.

To solve the above problem, the use of hollow inorganic fillers has been proposed (see JP-A-2020-83966, JP-A-2024-59029, JP-A-2013-173841, and JP-A-2024-92800). However, the resins used in these proposals are insufficient in dielectric properties and the compositions that are obtained are not well-balanced in whole properties.

### SUMMARY OF THE INVENTION

Accordingly, it is an object of the present invention to provide a heat-curable resin composition that provides a cured product having low relative permittivity, low dielectric loss tangent, and excellent bonding properties. A further object of the present invention is to provide a bonding film, a prepreg, a copper foil, a build-up film, a laminate, and a printed wiring board each including or having the composition.

The inventors of the present invention carried out extensive studies directed to solving the problems discussed above and have consequently found that a heat-curable resin composition as set forth below can achieve the above objects, thus completing the present invention.
<1> A heat-curable maleimide resin composition comprising:
   (A) a maleimide resin solid at 25°C and represented by formula (1) defined as: 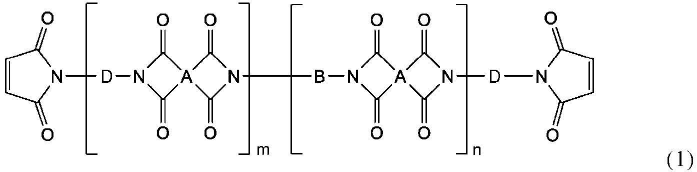 wherein each A independently represents a tetravalent organic group having a cyclic structure, each B independently represents a divalent hydrocarbon group having 6 to 60 carbon atoms, each D independently represents a divalent alicyclic hydrocarbon group having 6 to 200 carbon atoms or a hydrocarbon group derived from one or more selected from dimer diamine frames and trimer triamine frames, wherein at least one D represents a hydrocarbon group derived from one or more selected from dimer diamine frames and trimer triamine frames, m is 0 to 100, n is 0 to 100, and the repeating units in brackets with the subscripts m and n are bonded in any order that is not limited and may be bonded alternately, blockwise, or randomly;
   (B) an epoxy resin containing two or more epoxy groups in one molecule;
   (C) an anionic polymerization initiator; and
   (D) a hollow inorganic filler.
<2> The heat-curable maleimide resin composition according to <1>, wherein A in the formula (1) is a tetravalent organic group represented by any one of formulas listed as: 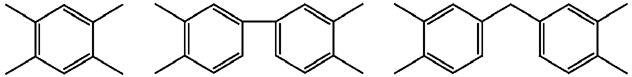 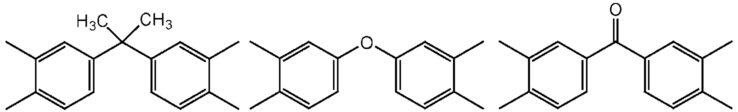 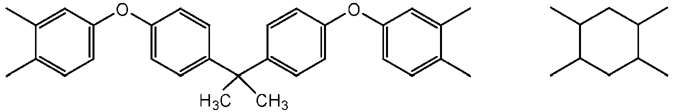 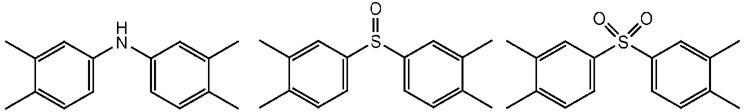 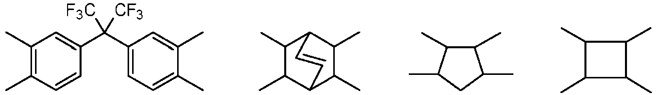 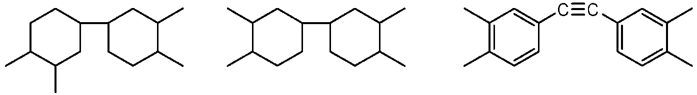 wherein the valence bonds that are not bonded to any substituents in the structural formulas are bonded to the carbonyl carbon atoms constituting the cyclic imide structures in the formula (1).
<3> The heat-curable maleimide resin composition according to <1> or <2>, wherein the anionic polymerization initiator (C) is an imidazole compound having a triazine ring.
<4> The heat-curable maleimide resin composition according to any one of <1> to <3>, wherein the hollow inorganic filler (D) comprises one or more selected from hollow silica and hollow glass.
<5> The heat-curable maleimide resin composition according to <4>, wherein the hollow inorganic filler (D) is treated with a silane coupling agent.
<6> The heat-curable maleimide resin composition according to any one of <1> to <5>, further comprising (E) a nonhollow inorganic filler.
<7> The heat-curable maleimide resin composition according to <6>, wherein the nonhollow inorganic filler (E) is spherical silica having an average particle size of 0.1 to 5.0 µm.
<8> A bonding film comprising the heat-curable maleimide resin composition according to any one of <1> to <7>.
<9> A build-up film comprising the heat-curable maleimide resin composition according to any one of <1> to <7>.
<10> A resin-coated copper foil comprising the heat-curable maleimide resin composition according to any one of <1> to <7>.
<11> A prepreg comprising the heat-curable maleimide resin composition according to any one of <1> to <7>.
<12> A laminate comprising the heat-curable maleimide resin composition according to any one of <1> to <7>.
<13> A printed wiring board using any one of:
   the bonding film according to <8>,
   the build-up film according to <9>,
   the resin-coated copper foil according to <10>,
   the prepreg according to <11>, and
   the laminate according to <12>.

The heat-curable resin composition of the present invention provides a cured product that has low relative permittivity, low dielectric loss tangent, and excellent bonding properties. Thus, the heat-curable maleimide resin composition of the present invention is useful in bonding films, build-up films, resin-coated copper foils, prepregs, laminates, and printed wiring boards.

### DETAILED DESCRIPTION OF THE INVENTION

Hereinafter, the present invention will be described in greater detail.

### [(A) Maleimide resins solid at 25°C]

The component (A) in the present invention is a maleimide resin that is solid at 25°C and is represented by formula (1) defined as: 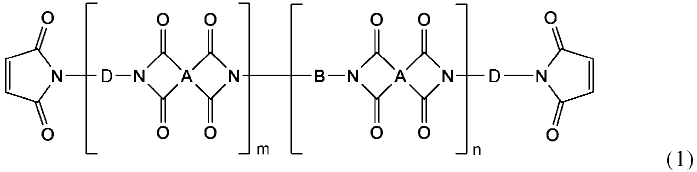 wherein each A independently represents a tetravalent organic group having a cyclic structure, each B independently represents a divalent hydrocarbon group having 6 to 60 carbon atoms, each D independently represents a divalent alicyclic hydrocarbon group having 6 to 200 carbon atoms or a hydrocarbon group derived from one or more selected from dimer diamine frames and trimer triamine frames, At least one D represents a hydrocarbon group derived from one or more selected from dimer diamine frames and trimer triamine frames, m is 0 to 100, n is 0 to 100, and the repeating units in brackets with the subscripts m and n are bonded in any order that is not limited and are bonded alternately, blockwise, or randomly.

The component (A) in the present invention has one or more hydrocarbon groups derived from one or more selected from dimer diamine frames and trimer triamine frames, in one molecule. The component (A) having a hydrocarbon group derived from a dimer diamine frame or a trimer triamine frame allows the composition, including the component (A), to provide cured products having a low crosslinking density and hence a low elastic modulus, and exhibit enhanced wetting properties with respect to a substrate of, here, glass, and thus attain enhanced adhesion. Furthermore, this moiety is also effective in improving dielectric properties (in lowering the relative permittivity and the dielectric loss tangent).

The term "dimer diamine" as used herein refers to an aminomethylated product of a liquid dibasic acid called dimer acid. The liquid dibasic acid is based on a C₃₆ dicarboxylic acid formed by the dimerization of a C₁₈ unsaturated fatty acid from a natural raw material, such as a plant oil or fat, and the aminomethylation occurs on the carboxyl groups in the liquid dibasic acid. The frame of a dimer acid does not consist of single frame but has a plurality of structures, and the dimer acid has isomeric forms. Typical dimer acids are classified as (a) linear type, (b) monocyclic type, (c) aromatic ring type, and (d) polycyclic type. Herein, the term "dimer acid frame" indicates a group derived from a dimer diamine that has a structure resulting from the substitution of carboxyl groups of such dimer acid by primary aminomethyl groups. That is, the dimer acid frame present in the component (A) preferably has a group derived from a dimer acid of any of the formulas (a) to (d) below by the substitution of the two carboxyl groups by methylene groups.

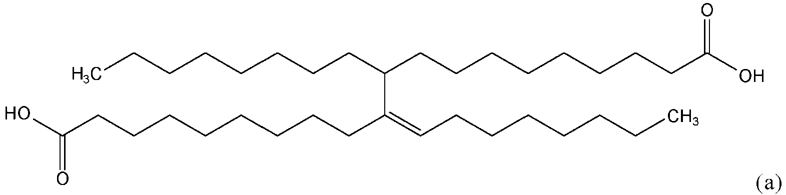

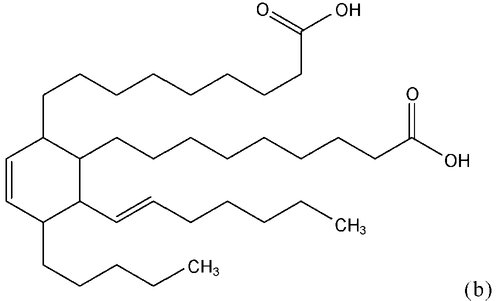

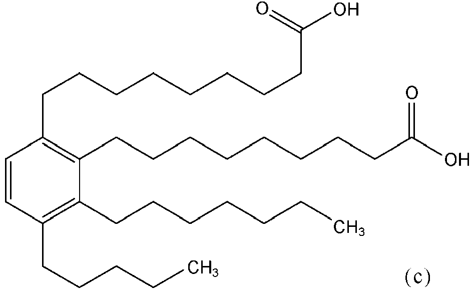

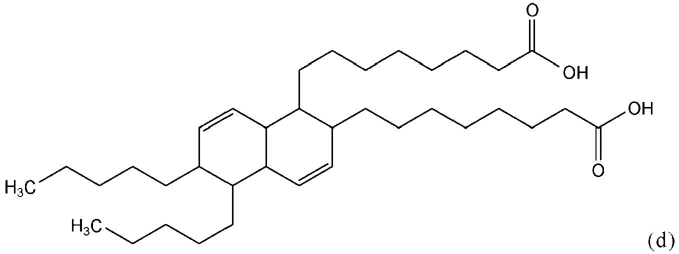

From the points of view of the heat resistance and the reliability of cured products, the hydrocarbon group derived from a frame of the dimer diamine in the maleimide resin as the component (A) is more preferably one that has undergone hydrogenation reaction and consequently has a reduced number of carbon-carbon double bonds in the hydrocarbon group derived from a frame of the dimer diamine.

The term "trimer triamine" as used herein refers to an aminomethylated product of a by-product, called trimer acid, that basically occurs during synthesis of a dimer acid, and the aminomethylation occurs on the carboxyl groups in the acid. A trimer acid is a tribasic acid based on a C₅₄ tricarboxylic acid formed by the trimerization of a C₁₈ unsaturated fatty acid from a natural raw material, such as a plant oil or fat. Similarly to dimer acids, the frame of a trimer acid is not single and has a plurality of structures, and the trimer acid has isomeric forms.

From the points of view of the heat resistance and the reliability of cured products, the hydrocarbon group derived from a trimer triamine frame in the maleimide resin as the component (A) is more preferably one that has undergone hydrogenation reaction and consequently has a reduced number of carbon-carbon double bonds in the hydrocarbon group derived from a frame of the trimer triamine.

In the formula (1), each A independently represents a tetravalent organic group having a cyclic structure, and is, in particular, preferably a tetravalent organic group represented by any one of the following formulas: 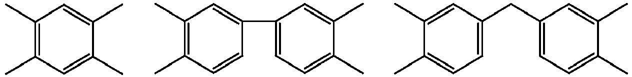 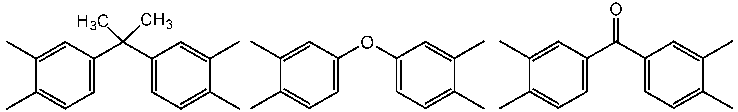 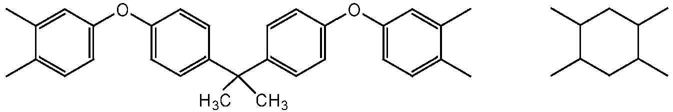 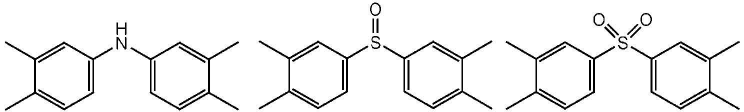 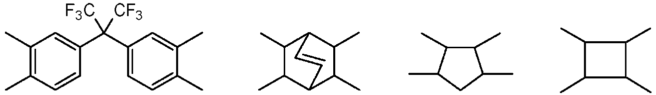 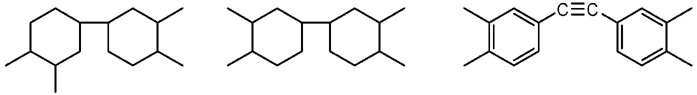 wherein the valence bonds that are not bonded to any substituents in the structural formulas are bonded to the carbonyl carbon atoms constituting the cyclic imide structures in the formula (1).

In the formula (1), each D independently represents a divalent alicyclic hydrocarbon group having 6 to 200 carbon atoms or a hydrocarbon group derived from one or more selected from dimer diamine frames and trimer triamine frames, and at least one D represents a hydrocarbon group derived from one or more selected from dimer diamine frames and trimer triamine frames. The divalent alicyclic hydrocarbon group has 6 to 200 carbon atoms, preferably 8 to 80 carbon atoms. In particular, the divalent alicyclic hydrocarbon group is more preferably a branched divalent alicyclic hydrocarbon group that is substituted by an alkyl or alkenyl group having 6 to 60 carbon atoms, preferably 8 to 60 carbon atoms, more preferably 10 to 55 carbon atoms, in place of one or more hydrogen atoms in the divalent alicyclic hydrocarbon group. The branched divalent alicyclic hydrocarbon group may be a saturated aliphatic hydrocarbon group or an unsaturated hydrocarbon group, and may have an alicyclic structure or an aromatic ring structure in a midway through the molecular chain.

In the formula (1), each B independently represents a divalent hydrocarbon group having 6 to 60 carbon atoms, and, in particular, independently represents a divalent aliphatic hydrocarbon group having 6 to 60 carbon atoms or an aromatic hydrocarbon group having 6 to 60 carbon atoms. Preferably, each B independently represents a divalent aliphatic hydrocarbon group having 6 to 30 carbon atoms or an aromatic hydrocarbon group having 6 to 30 carbon atoms. The divalent hydrocarbon groups may have a cyclic structure or a branched structure, but do not have the groups represented by D. The divalent aromatic hydrocarbon group may have a valence bond directly on the aromatic ring or may have a valence bond via a linear or branched divalent aliphatic hydrocarbon group on the aromatic ring.

The maleimide resin represented by the formula (1) may be classified by m and n into the following cases 1 to 3.

### [Case 1: m = 1 to 100 and n = 1 to 100]

When m = 1 to 100 and n = 1 to 100, the maleimide resin, although high in melt viscosity before curing, has excellent dielectric properties compared to conventional maleimide resins having many aromatic rings. In addition, such a maleimide resin exhibits high adhesion with respect to copper foils and is less prone to absorb moisture than conventional heat-curable resins, such as epoxy resins, thus reducing the influence by moisture. Furthermore, the maleimide resin has a higher Tg and a smaller coefficient of thermal expansion (CTE) than maleimide resins having m = 1 to 100 and n = 0, and provides a composition with high reliability.

When m = 1 to 100 and n = 1 to 100, m is preferably 1 to 60, and more preferably 2 to 50, and n is preferably 1 to 60, more preferably 1 to 50, and still more preferably 1 to 40. From such points of view as the fluidity and the formability of the composition, and the strength of cured products, in particular, the total m + n is preferably in the range of 2 to 50. If, on the other hand, m + n is greater than 50, the composition is lowered in fluidity and may exhibit poor formability.

The repeating units in brackets with the subscripts m and n are bonded in an order that is not limited and may be bonded alternately, blockwise, or randomly. In particular, blockwise bonding is preferable because high Tg is obtained easily. When m and n are in the above ranges, the maleimide resin is basically solid at 25°C.

### [Case 2: m = 1 to 100 and n = 0]

When m = 1 to 100 and n = 0, the maleimide resin outperforms, in dielectric properties, other conventional maleimide resins having many aromatic rings. In particular, such a maleimide resin effectively maintains dielectric properties even at high frequencies or under high-temperature and high-humidity conditions, and exhibits still higher adhesion with respect to copper foils and other resins than the maleimide resin satisfying the above condition 1. Thus, a superior composition can be obtained.

In the formula (1) according to the condition 2, m is 1 to 100, preferably 1 to 60, and more preferably 1 to 50. If m is too large, solubility and fluidity are lowered, and formability may be deteriorated.

In the maleimide resin as the component (A) satisfying either of the above two conditions, the number average molecular weight is not particularly limited but, from the point of view of handling properties of the composition, is preferably 1,000 to 50,000, and more preferably 2,000 to 30,000. The components (A) may be used alone, or two or more of them may be used in combination.

The term "the number average molecular weight" as used herein refers to a number average molecular weight measured by gel permeation chromatography (GPC) relative to polystyrene standards under the conditions below.

### [Measurement conditions]

Developing solvent: tetrahydrofuran (THF)
Flow rate: 0.35 mL/min
Detector: differential refractometer (RI)
Columns: TSK Guardcolumn SuperH-L
   TSKgel SuperHZ4000 (4.6 mm I.D. × 15 cm × 1)
   TSKgel SuperHZ3000 (4.6 mm I.D. × 15 cm × 1)
   TSKgel SuperHZ2000 (4.6 mm I.D. × 15 cm × 2)
      (all manufactured by Tosoh Corporation)
Column temperature: 40°C
Sample injection volume: 5 µL (0.2% by mass THF solution)

### [Case 3: m = n = 0]

When m = n = 0, the maleimide resin has the simplest structure of the formula (1) in which both terminals are maleimides and the dimer diamine frame is at the center. This maleimide resin outperforms, in dielectric properties, other conventional maleimide resins having many aromatic rings. In particular, such a maleimide resin effectively maintains dielectric properties even at high frequencies. Furthermore, such a maleimide resin is liquid at 25°C and is effective in improving the formability of the resin composition of the present invention and in improving handling properties, for example, film properties, before curing.

The maleimide resin satisfying this condition is used in combination with one or more of the above maleimide resins that are solid at 25°C.

The viscosity of this maleimide resin is preferably 1.0 to 5.0 Pa·s as measured at 25°C and 5 rpm using a cone plate-flat plate rotary viscometer described in JIS Z8803: 2011.

### [(B) Epoxy resins containing two or more epoxy groups in one molecule]

The heat-curable maleimide resin composition of the present invention includes, as the component (B), an epoxy resin containing two or more epoxy groups in one molecule. The addition of such an epoxy resin makes it possible to, in particular, increase the adhesion of the resin composition to adherends and to improve other mechanical properties.

In consideration of, for example, reactivity and storage properties, the component (B) is preferably an epoxy resin having glycidyl groups.

Examples of the components (B) include phenol novolac-type epoxy resins, bisphenol A-type epoxy resins, bisphenol F-type epoxy resins, biphenol-type epoxy resins, naphthalene-type epoxy resins, anthracene-type epoxy resins, naphthol-type epoxy resins, xylylene-type epoxy resins, biphenyl-type epoxy resins, biphenyl aralkyl-type epoxy resins, triphenylmethane-type epoxy resins, alicyclic epoxy resins, glycidylamine-type epoxy resins, dicyclopentadiene-type epoxy resins, stilbene-type epoxy resins, sulfur atom-containing epoxy resins, phosphorus atom-containing epoxy resins, and amino-type epoxy resins.

From the points of view of compatibility and wetting properties with respect to substrates, the component (B) is preferably one that is liquid at 25°C, and is more preferably a glycidylamine-type epoxy resin.

The amount in which the component (B) is added is preferably 0.05 to 20 parts by mass, and more preferably 0.1 to 15 parts by mass per 100 parts by mass of the total of the components (A) and (B). This range advantageously ensures that the curing rate at the time of forming is appropriate. Furthermore, cured products that are obtained will have a good balance among heat resistance, moisture resistance, and low dielectric properties, and are likely to attain enhanced adhesion with respect to adherends.

The epoxy resins as the components (B) may be used alone, or two or more of them may be used in combination.

### [(C) Anionic polymerization initiators]

The component (C) is added to initiate and promote the curing reaction of the heat-curable maleimide resin of the present invention. In consideration of the reaction between the maleimide resin as the component (A) and the epoxy resin as the component (B), an anionic polymerization initiator is used as the component (C). Examples of the anionic polymerization initiators include basic compounds, such as imidazoles and tertiary amines, and organic phosphorus compounds. Imidazoles are preferably used.

The anionic polymerization initiator as the component (C) is more preferably an imidazole compound having a triazine ring. The triazine ring not only effectively enhances adhesion, but also ensures appropriate curability and storage stability.

Specific examples thereof include 2,4-diamino-6-[2'-methylimidazolyl-(1')]-ethyl-s-triazine (product name: 2MZ-A, manufactured by SHIKOKU KASEI HOLDINGS CORPORATION), 2,4-diamino-6-[2'-undecylimidazolyl-(1')]-ethyl-s-triazine (product name: C11Z-A, manufactured by SHIKOKU KASEI HOLDINGS CORPORATION), 2,4-diamino-6-[2'-ethyl-4'-methylimidazolyl-(1')]-ethyl-s-triazine (product name: 2E4MZ-A, manufactured by SHIKOKU KASEI HOLDINGS CORPORATION), and isocyanuric acid adduct of 2,4-diamino-6-[2'-methylimidazolyl-(1')]-ethyl-s-triazine (product name: 2MA-OK, manufactured by SHIKOKU KASEI HOLDINGS CORPORATION).

The amount in which the component (C) is added is preferably 0.1 to 5 parts by mass, and more preferably 0.5 to 3 parts by mass per 100 parts by mass of the total of the components (A) and (B). If the amount of the component (C) per 100 parts by mass of the total of the components (A) and (B) is less than 0.1 parts by mass, curability is disadvantageously lowered. If the amount is more than 5 parts by mass, the storage stability of the composition is disadvantageously deteriorated.

The components (C) may be used alone, or two or more of them may be used in combination.

On the other hand, the anionic polymerization initiator may be used in combination with a radical polymerization initiator so that the reaction of functional groups in the resin will be promoted. The radical polymerization initiator can induce the curing of a heat-curable resin that is not reactive to anionic polymerization initiators, and can promote the reaction between maleimide groups. In general, the reaction by radical polymerization alone gives a cured product having low dielectric properties. However, epoxy groups in the component (B) remain unreacted in the system and may cause problems, such as elution, in some cases. Thus, the use of radical polymerization initiators is not very preferable for the applications of interest in the present invention, but is still acceptable as long as curability is not impaired.

### [(D) Hollow inorganic fillers]

The heat-curable maleimide resin composition of the present invention further includes a hollow inorganic filler as the component (D). Nonhollow inorganic fillers (described later) that are conventionally used as fillers and are not hollow are added to increase the strength and the rigidity of cured products of the composition and also to control the coefficient of thermal expansion, and the dimensional stability of cured products. In general, however, nonhollow inorganic fillers have high relative permittivity. Such hollow inorganic filler may be used to reduce the relative permittivity.

The hollow inorganic fillers are not particularly limited. From such points of view as the strength of particles and availability, hollow silica or hollow glass is preferable, and hollow silica is more preferable in further consideration of dielectric properties. Hollow silica and hollow glass may be used alone or in combination of the two.

The average particle size and the shape of the hollow inorganic filler are not particularly limited. From the point of view of board processability, in particular, spherical hollow silica having an average particle size of 0.1 to 5 µm is favorably used. The average particle size as used herein refers to a value determined as the mass average D₅₀ (or median diameter) by particle size distribution measurement according to laser light diffractometry.

The void content of the hollow inorganic filler is preferably 20 to 90% by volume, and more preferably 30 to 80% by volume. When the void content is in this range, cured products of the heat-curable resin composition have low relative permittivity and low dielectric loss tangent and have a good balance between strength and dimensional stability of the cured products. If, for example, the void content is too low, the relative permittivity is not sufficiently reduced. If the void content is too high, the particles are low in strength and prone to breakage, and tend to fail to provide the intended effects. Here, the void content is the volume percentage of spaces in the particles relative to the volume of the inorganic filler.

In order to improve the properties, such as dispersibility, of the hollow inorganic filler it is preferred that the hollow inorganic filler be surface-treated with a silane coupling agent that has an organic group capable of reacting with the functional groups in the components (A) to (D). Examples of such silane coupling agents include epoxy group-containing alkoxysilanes, amino group-containing alkoxysilanes, (meth)acrylic group-containing alkoxysilanes, and alkenyl group-containing alkoxysilanes.

Preferred silane coupling agents are (meth)acrylic group- and/or amino group-containing alkoxysilanes, and specific examples thereof include 3-methacryloxypropyltrimethoxysilane, 3-acryloxypropyltrimethoxysilane, N-phenyl-3-aminopropyltrimethoxysilane, N-2-(aminoethyl)-3-aminopropyltrimethoxysilane, and 3-aminopropyltrimethoxysilane. The silane coupling agents may be used alone, or two or more of them may be used in combination.

In the heat-curable resin composition of the present invention, the component (D) accounts for 1 to 60% by mass, preferably 3 to 55% by mass, and more preferably 5 to 50% by mass of the whole composition. The components (D) may be used alone, or two or more of them may be used in combination.

### [(E) Nonhollow inorganic fillers]

The heat-curable resin composition of the present invention may further contain a nonhollow inorganic filler as the component (E). As explained earlier, the nonhollow inorganic fillers tend to raise the relative permittivity of cured products of the heat-curable resin composition of the present invention. However, adding nonhollow inorganic fillers is still acceptable because nonhollow inorganic fillers outperform the hollow inorganic fillers in the ability of increasing strength and rigidity and controlling the coefficient of thermal expansion, and the dimensional stability of cured products. The heat-curable resin composition that combines the components (D) and (E) is very likely to attain well-balanced properties, such as mechanical properties.

The component (E) may be any nonhollow inorganic filler usually added to an epoxy resin composition or a silicone resin composition. In order to reduce the dielectric loss tangent while avoiding an excessively high relative permittivity of the whole composition, silica particles, such as spherical silica, molten silica, or crystalline silica, or boron nitride is preferable.

Similarly to the component (D), the nonhollow inorganic filler may have any average particle size or shape which is not particularly limited. However, from the point of view of board processability, it is particularly preferred that spherical silica having an average particle size of 0.1 to 5 µm be used. The average particle size refers to the mass average D₅₀ (or median diameter) as determined by particle size distribution measurement using laser diffraction.

Similarly to the component (D), in order to improve the properties of the nonhollow inorganic filler, it is preferred that the nonhollow inorganic filler be surface-treated with a silane coupling agent that has an organic group capable of reacting with the functional groups in the components (A) and (B). Examples of such silane coupling agents include epoxy group-containing alkoxysilanes, amino group-containing alkoxysilanes, (meth)acrylic group-containing alkoxysilanes, and alkenyl group-containing alkoxysilanes.

Preferred silane coupling agents are (meth)acrylic group-containing alkoxysilanes and amino group-containing alkoxysilanes, and specific examples thereof include 3-methacryloxypropyltrimethoxysilane, 3-acryloxypropyltrimethoxysilane, N-phenyl-3-aminopropyltrimethoxysilane, N-2-(aminoethyl)-3-aminopropyltrimethoxysilane, and 3-aminopropyltrimethoxysilane. The silane coupling agents may be used alone, or two or more of them may be used in combination.

When the component (E) is added to the heat-curable resin composition of the present invention, the amount thereof is 1 to 60% by mass, preferably 5 to 55% by mass, and more preferably 10 to 50% by mass of the whole composition. The components (E) may be used alone, or two or more of them may be used in combination.

### [Other additives]

Where necessary, various additives may be added to the heat-curable resin composition of the present invention. Such additional additives will be described below.

### [Heat-curable resins having a reactive group capable of reacting with a maleimide group]

In the present invention, heat-curable resins having a reactive group capable of reacting with the components (A) and (B) may be further added. The types of such resins are not particularly limited, and various resins may be used, and examples thereof include melamine resins, silicone resins, cyclic imide resins including maleimides other than the components (A), urea resins, heat-curable polyimide resins, modified polyphenylene ether resins, heat-curable acrylic resins, and epoxy-silicone hybrid resins.

Examples of the reactive groups capable of reacting with a cyclic imide group include cyclic imide groups, hydroxyl groups, acid anhydride groups, alkenyl groups, such as allyl groups and vinyl groups, (meth)acrylic groups, and thiol groups. From the point of view of reactivity, the reactive groups are preferably those selected from cyclic imide groups, hydroxyl groups, and alkenyl groups. From the point of view of dielectric properties, the reactive groups are more preferably alkenyl groups or (meth)acrylic groups.

The amount of this heat-curable resin is preferably 0 to 40% by mass of the whole of the heat-curable resin composition of the present invention.

Other additives may be further added, and examples thereof include non-functional silicone oils, reactive diluents, thermoplastic resins, thermoplastic elastomers, organic synthetic rubbers, photosensitizers, light stabilizers, polymerization inhibitors, flame retardants, pigments, dyes, adhesion aids, and ion trapping agents.

The silane coupling agents described above, such as epoxy group-containing alkoxysilanes, amino group-containing alkoxysilanes, (meth)acrylic group-containing alkoxysilanes, and alkenyl group-containing alkoxysilanes, for use in the surface treatment of the hollow inorganic fillers and the nonhollow inorganic fillers may be separately added to the heat-curable resin composition of the present invention. Specific examples of the silane coupling agents include those same as described above.

The heat-curable maleimide resin composition of the present invention may be handled as a varnish or slurry dissolved in an organic solvent. The composition formed into a varnish is easy to produce films and is also easy to apply to and impregnate a glass cloth made of E-glass, low-permittivity glass, quartz glass, or the like. The organic solvent to be used may be any organic solvent without limitation as long as the solvent can dissolve the components (A) and (B) and the optional heat-curable resins having a reactive group capable of reacting with the components (A) and (B). Examples thereof include anisole, tetralin, mesitylene, xylene, toluene, tetrahydrofuran (THF), dimethylformamide (DMF), dimethylsulfoxide (DMSO), and acetonitrile. In particular, aromatic organic solvents, such as anisole, tetralin, mesitylene, xylene, and toluene, are preferable. While low-boiling ketone solvents having a boiling point of 100°C or below, such as methyl ethyl ketone (MEK) and methyl isobutyl ketone (MIBK), are frequently used in varnish or slurry preparation, the maleimide resins as the components (A) used in the present invention exhibit low solubility in these ketone solvents and thus the use of such low-boiling ketone solvents is sometimes unfavorable. The organic solvents may be used alone, or two or more of them may be used in combination.

The heat-curable resin composition of the present invention may be produced by a method of, for example, mixing the components (A), (B), (C), and (D), and optionally other additives as required using, for example, a planetary mixer (manufactured by INOUE MFG., INC.) or stirring machine THINKY CONDITIONING MIXER (manufactured by THINKY CORPORATION). In this process, it is preferable to use an approach that avoids applying excessive load to prevent the component (D) from being broken.

The heat-curable resin composition can be formed into an uncured resin sheet or an uncured resin film by applying the above-described varnish to a substrate and evaporating the organic solvent. Furthermore, the uncured resin sheet or the uncured resin film can be cured to provide a cured resin sheet or a cured resin film. An exemplary method for producing such sheets and films is illustrated below, but the production method is not limited thereto.

For example, the heat-curable resin composition dissolved in an organic solvent (a varnish) is applied onto a substrate, and the coating is heated usually at a temperature of 80°C or above, preferably 100°C or above, for 0.5 to 20 minutes to remove the organic solvent, and is further heated at a temperature of 130°C or above, preferably 150°C or above, for 0.5 to 10 hours to form a strong cured resin film having a flat surface. The temperatures in the drying step for removing the organic solvent and in the subsequent thermal curing step may be each constant but are preferably each raised stepwise. In this manner, the organic solvent can be efficiently removed from the composition, and the curing reaction of the resin can proceed efficiently. For example, the varnish may be applied with a spin coater, a slit coater, a spray coater, a dip coater, or a bar coater, although not particularly limited thereto.

The substrate to be used may be a conventional resin substrate, and examples thereof include polyolefin resins, such as polyethylene (PE) resin, polypropylene (PP) resin, and polystyrene (PS) resin, and polyester resins, such as polyethylene terephthalate (PET) resin, polybutylene terephthalate (PBT) resin, and polycarbonate (PC) resin. The surface of the substrate may be subjected to release treatment. The thickness of the coating layer is not particularly limited, but the thickness after solvent removal is in the range of 1 to 200 µm, preferably 3 to 150 µm. Furthermore, a cover film may be used on the coating layer. In another embodiment, the components may be premixed beforehand and extruded with a melt kneader into a sheet or film shape, which may be used as it is.

The film obtained as described above may be used as a bonding film or a build-up film. Such bonding film may be used between a flexible printed wiring board core material and a cover lay film, or between an organic board and a build-up film. The build-up films are used in laminate or printed wiring board fabrication processes called the semi-additive process (SAP) or the modified semi-additive process (M-SAP).

Here, a resin-coated copper foil may be fabricated by using a copper foil as the substrate and forming an uncured or semi-cured film on the copper foil in the similar manner as described above. Alternatively, a resin-coated copper foil may be obtained by a series of steps in which the heat-curable resin is dissolved into an organic solvent in the similar manner as described above to provide a varnish, which is then applied to a release-treated polyethylene terephthalate (PET) film, the solvent is evaporated to prepare a film, the film is laminated to a copper foil, and the PET film is removed. The laminating conditions in this process are not particularly limited, but the film is preferably laminated while performing heating at a heating temperature of 80 to 130°C, 0.1 to 1.0 MPa, for 0.5 to 5 minutes.

The copper foil to be used may have any degree of roughness which is not limited. From the point of view of reducing the conductor loss, however, it is preferable to use a copper foil that has a 10 spot average roughness (Rz) of 1.5 µm or less on the surface in contact with the uncured or semi-cured heat-curable resin. To reduce the conductor loss, a small average roughness Rz is preferred and the average roughness Rz is preferably 1.3 µm or less, and more preferably 1.0 µm or less. On the other hand, a small Rz material is less effective in anchoring and the adhesion tends to be lowered. However, the heat-curable maleimide resin composition of the present invention has high adhesion and thus can be used on such a low roughness copper foil.

The copper foil to be used may be produced by any method without limitation. In general, copper foils are frequently produced by electrolysis or rolling, and electrolytic copper foils produced by electrolysis are frequently used. Furthermore, the copper foil to be used may be surface-treated to attain enhanced properties in respect of, for example, adhesion, heat resistance, and chemical resistance.

The thickness of the copper foil is not particularly limited. Those copper foils having a thickness in the range of 6 to 50 µm are normally used. Thinner copper foils may be used in the form known as copper foils with carriers. Carriers are attached to the thin copper foils to add a thickness to improve handling properties, which are then removed in a downstream process.

In addition, the heat-curable resin composition of the present invention in the form of varnish may be caused to impregnate a fibrous substrate, such as a glass cloth made of E-glass, low-permittivity glass, quartz glass, or the like, and the organic solvent may be removed to form it into a semi-cured state to thereby use it as a prepreg. Furthermore, such prepreg(s), copper foil(s), and the like may be stacked to form a laminate or a printed wiring board that may have a highly multilayered structure.

The prepreg includes a heat-curable resin and a fibrous substrate. The heat-curable resin is the heat-curable resin composition described hereinabove or a semi-cured product of the resin composition. The term "semi-cured product" refers to a product of the resin composition that has been cured to such an extent that the product still has a room for further curing. That is, the semi-cured product is in a semi-cured state, and is a so-called B-staged product, of the resin composition. On the other hand, the uncured state is sometimes termed as the A-stage. That is, the heat-curable resin may be the heat-curable resin composition in the A-stage, or may be the heat-curable resin composition in the B-stage. The fibrous substrate may be of, as described above, E-glass, low-permittivity glass, or quartz glass, or may be of, for example, S glass or T glass. Any type of glass may be used without being particularly limited, but a quartz glass cloth having low dielectric properties is preferable in order to take advantage of the properties of the heat-curable resin composition. The thickness of normally used fibrous substrates is, for example, 0.01 mm or more and 0.3 mm or less.

In the production of prepregs, it is preferable that the heat-curable resin be in the form of varnish described above in order to ensure that the resin will impregnate a fibrous substrate as the prepreg substrate. For example, the prepreg is produced in such a manner that the heat-curable resin composition prepared as a varnish is caused to impregnate a fibrous substrate and is then dried. The heat-curable resin is caused to impregnate the fibrous substrate by, for example, immersion or coating. Where necessary, the impregnation may involve repeated applications several times. In this process, multiple types of resin composition with different formulations or different concentrations may be used to repeatedly impregnate the fibrous substrate with such resin compositions so that the final product will have the desired formulation and the desired amount of impregnation. The fibrous substrate impregnated with the resin composition (the resin varnish) is heated under desired heating conditions of, for example, 80°C or above and 180°C or below for 1 minute or more and 20 minutes or less. The heating provides a prepreg including the A-staged or B-staged heat-curable resin. The heating evaporates the organic solvent from the varnish and can reduce the amount of or remove the organic solvent.

A laminate according to an aspect of the present invention is a stack that is formed by laminating an insulating layer, containing or consisting of a cured product of the heat-curable resin composition, and a layer other than the insulating layer one after another. Laminates that are generally well known are metal-clad laminates, in particular, copper-clad laminates. A metal-clad laminate includes an insulating layer including or consisting of a cured product of the heat-curable resin composition, and metal foils disposed on both sides of the insulating layer. The laminate may be a single-sided metal-clad laminate having a metal foil only on one side of the insulating layer. The insulating layer may consist of a cured product of the heat-curable resin composition or a cured product of the prepreg, or may be a stack including multiple layers of cured products of the prepregs. A copper-clad laminate may be fabricated using the resin-coated copper foil. Alternatively, a metal-clad laminate may be fabricated by preparing a cured product of the prepreg beforehand, and laminating a metal foil via a bonding film consisting of the heat-curable resin composition, between the cured product and the metal foil.

Such laminates may be produced by any conventional methods which are not particularly limited. When, for example, the prepreg is used, a single sheet of the prepreg or a stack of sheets of the prepregs may be provided, and a metal foil, such as copper foil, may be placed on both or one of the top and the bottom of the sheet or the stack, which are then hot pressed to integrate the stacked layers, thus providing a laminate.

A printed wiring board according to an aspect of the present invention includes a cured product of the heat-curable maleimide resin composition. The insulating layers in the metal-clad laminates used for producing of the printed wiring board may be layers produced using the prepregs described hereinabove. The printed wiring board may be produced by forming circuits and bonding the layers into a multilayer structure by a known process including cutting holes in the metal-clad laminates, metallization, and etching the metal foils.

The production of the printed wiring board may further include (1) a step of cutting holes in the insulating layers, (2) a step of roughening the insulating layers, and (3) a step of forming conductive layers. The steps (1) and (3) may be performed in accordance with known processes used for manufacturing printed wiring boards.

The step (1) is a step of cutting holes in the insulating layers. By this step, holes, such as via holes or through holes, may be formed in the insulating layers. The step (1) may involve, for example, a drill, a laser, or plasma in accordance with, for example, the formulation of the resin composition used for forming the insulating layers. The dimension and the shape of the holes are determined in accordance with the design of the printed wiring board.

The step (2) is a step of roughening the insulating layers. The insulating layers are roughened while removing (desmearing) resin residues called smears that have been generated in the step (1). The procedures and the conditions in the roughening treatment are not particularly limited, and known procedures and conditions used in the formation of insulating layers in printed wiring boards may be adopted. For example, the insulating layers may be roughened by sequentially performing: swelling treatment with a swelling liquid, roughening treatment with an oxidant, and neutralization treatment with a neutralization solution in this order.

The swelling liquid used in the roughening treatment is not particularly limited. Examples thereof include alkaline solutions and surfactant solutions, with alkaline solutions being preferable. The solutions that are commercially available may be used. Examples of such commercially available swelling liquids include "Swelling Dip Securiganth P" and "Swelling Dip Securiganth SBU" manufactured by Atotech Japan K.K. The swelling treatment with the swelling liquid may be performed in any manner without limitation. For example, the swelling treatment may be carried out by immersing the insulating layer in the swelling liquid at 30 to 90°C for 1 to 20 minutes. In order to control the swelling of the resin in the insulating layer to an appropriate level, it is preferable that the insulating layer be immersed in the swelling liquid at 40 to 80°C for 5 to 15 minutes.

The oxidant used in the roughening treatment is not particularly limited. Examples thereof include alkaline aqueous permanganate solutions that are aqueous sodium hydroxide solutions into which potassium permanganate or sodium permanganate is dissolved. The roughening treatment with the oxidant, such as an alkaline aqueous permanganate solution, is preferably performed by immersing the insulating layer in the oxidant solution that has been heated to 60 to 100°C, for 10 to 30 minutes. The concentration of the permanganate salt in the alkaline aqueous permanganate solution is preferably 5 to 10% by mass. The solutions commercially available may be used. Examples of the commercially available oxidants include alkaline aqueous permanganate solutions, such as "Concentrate Compact CP" and "Dosing Solution Securiganth P" manufactured by Atotech Japan K.K.

The neutralization solution used in the roughening treatment is preferably an acidic aqueous solution. Examples of the commercially available neutralization solutions include "Reduction Solution Securiganth P" manufactured by Atotech Japan K.K. The treatment with the neutralization solution may be carried out by immersing the oxidant-roughened surface in the neutralization solution at 30 to 80°C for 1 to 30 minutes. From such a point of view as workability, it is preferable that the oxidant-roughened workpiece be immersed in the neutralization solution at 40 to 70°C for 5 to 20 minutes.

The step (3) is a step of forming conductive layers. The conductive layer is formed on the insulating layer. The conductive materials used in the conductive layers are not particularly limited. In a preferred embodiment, the conductive layer includes one or more metals selected from the group consisting of gold, platinum, palladium, silver, copper, aluminum, cobalt, chromium, zinc, nickel, titanium, tungsten, iron, tin, and indium. The conductive layer may be a single-metal layer or an alloy layer. Examples of the alloy layers include layers formed of alloys of two or more metals selected from the above group (for example, nickel-chromium alloy, copper-nickel alloy, and copper-titanium alloy). In particular, from such points of view as general versatility in conductive layer formation, cost effectiveness, and ease of patterning, preferred layers are single-metal layers of chromium, nickel, titanium, aluminum, zinc, gold, palladium, silver, or copper, and alloy layers of nickel-chromium alloy, copper-nickel alloy, or copper-titanium alloy. More preferred layers are single-metal layers of chromium, nickel, titanium, aluminum, zinc, gold, palladium, silver, or copper, and alloy layers of nickel-chromium alloy. Single-metal layers of copper are still more preferable.

The conductive layer may be of a single-layer structure or may be of a multilayer structure that includes a stack of two or more single-metal layers or alloy layers of different types of metals or alloys. When the conductive layer is a multilayer structure, the layer in contact with the insulating layer is preferably a single-metal layer of chromium, zinc, or titanium, or an alloy layer of nickel-chromium alloy. The thickness of the conductive layer varies depending on the intended design of the printed wiring board but is normally 3 to 35 µm, preferably 5 to 30 µm. The conductive layers may be formed by plating.

### WORKING EXAMPLES

The present invention will be described in greater detail below with reference to working examples and comparative examples. However, the present invention is not limited to the working examples given below.

### [(A) Maleimide resins having one or more hydrocarbon groups derived from a dimer acid frame and/or a trimer acid frame in one molecule]

(A-1): Bismaleimide resin having a hydrocarbon group derived from a dimer acid frame, represented by the formula below (SLK-2600, manufactured by Shin-Etsu Chemical Co., Ltd., solid at 25°C) 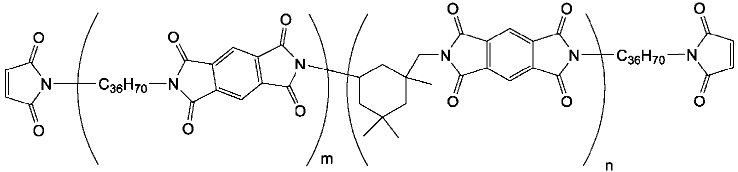 wherein -C₃₆H₇₀- indicates a structure derived from a dimer acid frame, and m ≈ 1 and n ≈ 5.
(A-2): Bismaleimide resin represented by the formula below (product name: BMI-5000, manufactured by Designer Molecules Inc., solid at 25°C) 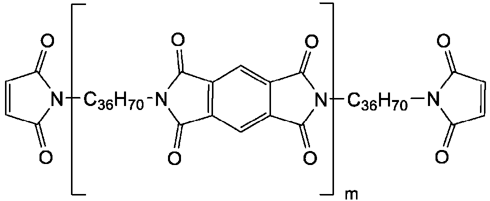 wherein -C₃₆H₇₀- indicates a hydrocarbon group derived from a dimer acid frame and m ≈ 8 (average).
(A-3): Bismaleimide resin represented by the formula below (product name: SLK-1500, manufactured by Shin-Etsu Chemical Co., Ltd., syrup-like at 25°C) 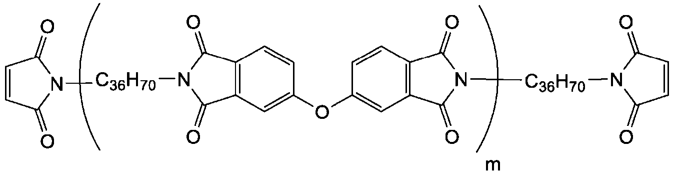 wherein -C₃₆H₇₀- indicates a hydrocarbon group derived from a dimer acid frame and m ≈ 3 (average).
(A-4): Bismaleimide resin represented by the formula below (product name: SLK-6895, manufactured by Shin-Etsu Chemical Co., Ltd., liquid at 25°C) 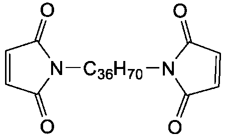 wherein -C₃₆H₇₀- indicates a hydrocarbon group derived from a dimer acid frame.
(A-5): 4,4'-Diphenylmethanebismaleimide (BMI-1000, manufactured by DAIWA KASEI INDUSTRIAL Co., Ltd., solid at 25°C, for comparative examples)
(A-6): Xylok-type polymaleimide resin (MIR-3000, manufactured by Nippon Kayaku Co., Ltd., solid at 25°C, for comparative examples)

### [(B) Epoxy resins containing two or more epoxy groups in one molecule]

(B-1): Bisphenol A-type liquid epoxy resin (product name: jER-828, manufactured by Mitsubishi Chemical Group Corporation)
(B-2) Aminophenol-type liquid epoxy resin (product name: jER-630, manufactured by Mitsubishi Chemical Group Corporation)

### [(C) Anionic polymerization initiators]

(C-1): 2-Ethyl-4-methylimidazole (2E4MZ, manufactured by SHIKOKU KASEI HOLDINGS CORPORATION)
(C-2): 2,4-Diamino-6-[2'-undecylimidazolyl-(1')]-ethyl-s-triazine (C11Z-A, manufactured by SHIKOKU KASEI HOLDINGS CORPORATION)
(C-3): Dicumyl peroxide (product name: PERCUMYL D, manufactured by NOF CORPORATION, radical polymerization initiator for comparative examples)

### [(D) Hollow inorganic fillers]

(D-1): Hollow glass particles (product name: MG-005, manufactured by TAIHEIYO CEMENT CORPORATION, average particle size: 1.6 µm, void content: 80% by volume) treated with an amino group-containing silane coupling agent (product name: KBM-573, manufactured by Shin-Etsu Chemical Co., Ltd.)
(D-2): Hollow silica particles (product name: HS-05, manufactured by Tokuyama Corporation, average particle size: 0.5 µm, void content: 75% by volume) treated with an amino group-containing silane coupling agent (product name: KBM-573, manufactured by Shin-Etsu Chemical Co., Ltd.)

### [(E) Nonhollow inorganic filler]

(E-1): Spherical silica (product name: LVS-512H, manufactured by TATSUMORI LTD., average particle size: 0.5 µm) treated with an amino group-containing silane coupling agent (product name: KBM-573, manufactured by Shin-Etsu Chemical Co., Ltd.)

### <Preparation of resin varnishes and compatibility>

The components as shown in Tables 1 and 2 except the component (C) were added in the amounts described in Tables 1 and 2 to a 500 mL four-necked flask equipped with a Dimroth condenser and a stirrer. The mixture was stirred at 80°C for 4 hours and was cooled to room temperature. The component (C) was added and the resultant mixture was stirred at room temperature for 1 hour and was filtered through a 100-mesh metal screen to provide a resin composition as a varnish. The resin compositions obtained were subjected to the following evaluations. The results are as shown in Tables 1 and 2.

### <Preparation of uncured resin films and handling properties>

The resin varnishes prepared without problems through the above procedures were each applied to a release-treated 50 µm thick PET film (TN-010, manufactured by TOYOBO STC CO., LTD.) with a roller coater, and dried at 100°C for 10 minutes to provide 50 µm thick uncured resin films. To evaluate the handling properties of the uncured resin films obtained, the uncured resin films were cut with a cutter knife. The rating was denoted as ∘ when no spilling occurred from the uncured resin, Δ when spilling occurred from the uncured resin, and × when the uncured resin film had been cracked at the time of fabrication.

### <Relative permittivity and dielectric loss tangent>

The above uncured resin film together with the release-treated PET film was fixed on a flat plate, and was cured by being heated at 200°C for 60 minutes to provide a cured resin film. Network analyzer (product name: E5063-2D5, manufactured by Keysight) and a strip line type measurement system (manufactured by KEYCOM Corporation) were connected to the cured resin film to measure the relative permittivity and the dielectric loss tangent of the cured resin film at frequencies of 10 GHz and 40 GHz.

### <Coefficient of thermal expansion>

The cured resin films prepared above (20 mm × 5 mm × 50 µm in thickness) were analyzed on TMA 450 (manufactured by TA Instruments) to measure and calculate the coefficient of thermal expansion at 0 to 50°C. The measurement was performed at a heating rate of 5°C/min.

### <Tensile modulus of elasticity, tensile strength, and elongation>

The cured resin films prepared above (50 µm thick) were cut to 10 cm in length × 1 cm in width. The tensile modulus of elasticity, the tensile strength, and the elongation of the cured resin films were measured with tensile strength tester (Autograph AGS-5kNG, manufactured by Shimadzu Corporation).

### <Peel strength>

A SUS 304 sheet of 75 mm in length, 25 mm in width, and 1.0 mm in thickness was provided, and the uncured resin film on the PET film was placed so that the resin film would be in contact with one side of the SUS 304 sheet. The resin film was laminated at 100°C and 0.3 MPa pressure for 60 seconds. After the lamination, the PET film was removed, and an 18 µm thick copper foil (Ra: 0.17 µm, Rz: 0.6 µm) was placed on the resin film and was laminated at 100°C and 0.3 MPa pressure for 60 seconds. After the lamination, the resin was cured by being heated at 180°C for 60 minutes to thereby fabricate adhesion test specimens. To evaluate bonding properties, the copper foil of each adhesion test specimen was peeled from the SUS 304 sheet while measuring the peel strength (kN/m) at a temperature of 23°C and a tensile rate of 50 mm/min in accordance with JIS C6481: 1996, "Test methods of copper-clad laminates for printed wiring boards". Furthermore, the test specimens prepared above were allowed to stand at a temperature of 85°C and a humidity of 85% for 168 hours, and then the peel strength (kN/m) was measured in the similar manner.

**Table 1**

| Formulations of compositions (parts by mass) | | | Working examples | | | | | | | | | |
|---|---|---|---|---|---|---|---|---|---|---|---|---|
| | | | 1 | 2 | 3 | 4 | 5 | 6 | 7 | 8 | 9 | 10 |
| (A) | SLK-2600 | A-1 | 40.0 | | 70.0 | | | | | | | |
| | BMI-5000 | A-2 | 50.0 | 95.0 | | 75.0 | 95.0 | 95.0 | 95.0 | 95.0 | 95.0 | 85.0 |
| | SLK-1500 | A-3 | | | 25.0 | 10.0 | | | | | | |
| | SLK-6895 | A-4 | | | | 10.0 | | | | | | |
| | BMI-1000 | A-5 | | | | | | | | | | 10.0 |
| | MIR-3000 | A-6 | | | | | | | | | | |
| (B) | jER-828 | B-1 | 5.0 | 5.0 | 5.0 | 5.0 | | 5.0 | 5.0 | 5.0 | 5.0 | 5.0 |
| | jER-630 | B-2 | | | | | 5.0 | | | | | |
| (C) | 2E4MZ | C-1 | 1.0 | 1.0 | 1.0 | 1.0 | 1.0 | | 1.0 | 1.0 | 1.0 | 1.0 |
| | C11Z-A | C-2 | | | | | | 1.0 | | | | |
| | PERCUMYL D | C-3 | | | | | | | | | | |
| (D) | MG-005 | D-1 | 35.0 | 35.0 | 35.0 | 35.0 | 35.0 | 35.0 | | 20.0 | 20.0 | 35.0 |
| | HS-05 | D-2 | | | | | | | 35.0 | | | |
| (E) | LVS-512H | E-1 | | | | | | | | 15.0 | 35.0 | |
| (Solvents) | Anisole | | 100.0 | 100.0 | 100.0 | 100.0 | 100.0 | 100.0 | 100.0 | 100.0 | 100.0 | 100.0 |
| | Methyl ethyl ketone (MEK) | | | | | | | | | | | |
| Evaluation results | Handling properties | | ○ | ○ | Δ | ○ | ○ | ○ | ○ | ○ | ○ | ○ |
| | Relative permittivity (10 GHz) | | 2.49 | 2.32 | 2.35 | 2.30 | 2.34 | 2.32 | 2.29 | 2.43 | 2.51 | 2.56 |
| | Dielectric loss tangent (10 GHz) | | 0.0016 | 0.0015 | 0.0017 | 0.0015 | 0.0016 | 0.0016 | 0.0013 | 0.0011 | 0.0010 | 0.0021 |
| | Relative permittivity (40 GHz) | | 2.51 | 2.31 | 2.35 | 2.32 | 2.35 | 2.31 | 2.28 | 2.43 | 2.51 | 2.61 |
| | Dielectric loss tangent (40 GHz) | | 0.0022 | 0.0014 | 0.0017 | 0.0014 | 0.0015 | 0.0015 | 0.0013 | 0.0010 | 0.0010 | 0.0022 |
| | Coefficient of thermal expansion | ppm/K | 51 | 75 | 45 | 80 | 72 | 72 | 71 | 68 | 51 | 69 |
| | Tensile modulus of elasticity | MPa | 850 | 250 | 1200 | 300 | 270 | 270 | 240 | 250 | 360 | 450 |
| | Tensile strength | MPa | 45 | 15 | 45 | 14 | 16 | 16 | 16 | 17 | 18 | 25 |
| | Elongation | % | 5 | 25 | 4 | 21 | 23 | 23 | 27 | 35 | 20 | 10 |
| | Peel strength (initial) | kN/m | 1.0 | 1.5 | 1.1 | 1.3 | 1.5 | 1.5 | 1.5 | 1.5 | 1.2 | 0.9 |
| | Peel strength (after moisture absorption) | kN/m | 0.8 | 1.1 | 0.6 | 0.8 | 1.2 | 1.2 | 1.1 | 1.1 | 1.0 | 0.7 |

**Table 2**

| Formulations of compositions (parts by mass) | | | Comparative examples | | | | | | | |
|---|---|---|---|---|---|---|---|---|---|---|
| | | | 1 | 2 | 3 | 4 | 5 | 6 | 7 | 8 |
| (A) | SLK-2600 | A-1 | 40.0 | 40.0 | | | | | | |
| | BMI-5000 | A-2 | 50.0 | 50.0 | 95.0 | 95.0 | | | 100.0 | 100.0 |
| | SLK-1500 | A-3 | | | | | | | | |
| | SLK-6895 | A-4 | | | | | | | | |
| | BMI-1000 | A-5 | | | | | | | | |
| | MIR-3000 | A-6 | | | | | | 95.0 | | |
| (B) | jER-828 | B-1 | 5.0 | 5.0 | 5.0 | 5.0 | 5.0 | 5.0 | | |
| | jER-630 | B-2 | | | | | | | | |
| (C) | 2E4MZ | C-1 | 1.0 | 1.0 | 1.0 | 1.0 | 1.0 | 1.0 | | |
| | C11Z-A | C-2 | | | | | | | | |
| | PERCUMYL D | C-3 | | | | | | | 1.0 | 1.0 |
| (D) | MG-005 | D-1 | | | | | | | 35.0 | 20.0 |
| | HS-05 | D-2 | | | | | | | | 15.0 |
| (E) | LVS-512H | E-1 | | 45.0 | | 45.0 | | | | |
| (Solvents) | Anisole | | 100.0 | 100.0 | 100.0 | 100.0 | | 40.0 | 100.0 | 100.0 |
| | Methyl ethyl ketone (MEK) | | | | | | 200.0 | 40.0 | | |
| Evaluation results | Handling properties | | ○ | ○ | ○ | ○ | × | × | ○ | ○ |
| | Relative permittivity (10 GHz) | | 2.65 | 2.82 | 2.43 | 2.75 | - | - | 2.21 | 2.35 |
| | Dielectric loss tangent (10 GHz) | | 0.0025 | 0.0022 | 0.0022 | 0.0020 | - | - | 0.0012 | 0.0011 |
| | Relative permittivity (40 GHz) | | 2.69 | 2.85 | 2.42 | 2.73 | - | - | 2.20 | 2.34 |
| | Dielectric loss tangent (40 GHz) | | 0.0026 | 0.0023 | 0.0021 | 0.0019 | - | - | 0.0011 | 0.0010 |
| | Coefficient of thermal expansion | ppm/K | 95 | 45 | 135 | 70 | - | - | 78 | 71 |
| | Tensile modulus of elasticity | MPa | 450 | 1500 | 130 | 380 | - | - | 250 | 270 |
| | Tensile strength | MPa | 41 | 45 | 15 | 15 | - | - | 15 | 15 |
| | Elongation | % | 10 | <2 | 100 | 15 | - | - | 20 | 29 |
| | Peel strength (initial) | kN/m | 1.2 | 0.9 | 1.4 | 1.2 | - | - | 1.3 | 1.2 |
| | Peel strength (after moisture absorption) | kN/m | 0.4 | 0.7 | 0.6 | 0.7 | - | - | <0.2 | <0.2 |

## Claims

1. A heat-curable maleimide resin composition comprising:
(A) a maleimide resin solid at 25°C and represented by formula (1) defined as: 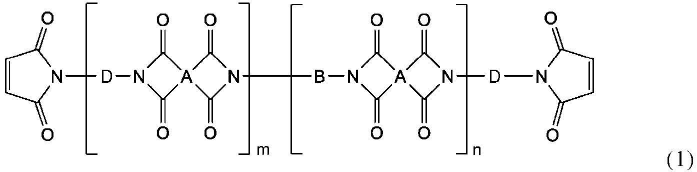 wherein each A independently represents a tetravalent organic group having a cyclic structure, each B independently represents a divalent hydrocarbon group having 6 to 60 carbon atoms, each D independently represents a divalent alicyclic hydrocarbon group having 6 to 200 carbon atoms or a hydrocarbon group derived from one or more selected from dimer diamine frames and trimer triamine frames, wherein at least one D represents a hydrocarbon group derived from one or more selected from dimer diamine frames and trimer triamine frames, m is 0 to 100, n is 0 to 100, and the repeating units in brackets with the subscripts m and n are bonded in any order that is not limited and may be bonded alternately, blockwise, or randomly;
(B) an epoxy resin containing two or more epoxy groups in one molecule;
(C) an anionic polymerization initiator; and
(D) a hollow inorganic filler.

2. The heat-curable maleimide resin composition according to claim 1, wherein A in the formula (1) is a tetravalent organic group represented by any one of formulas listed as: 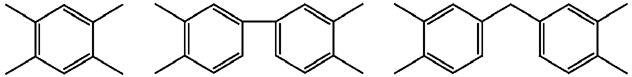 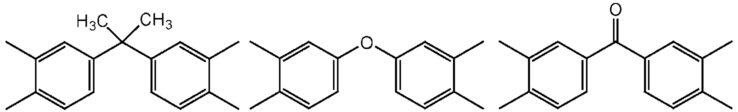 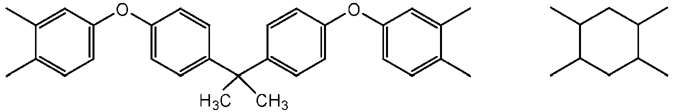 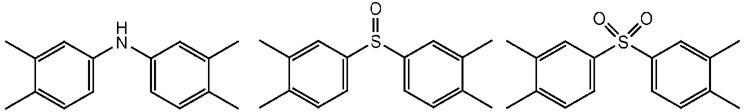 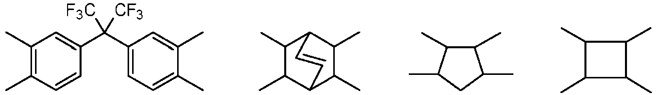 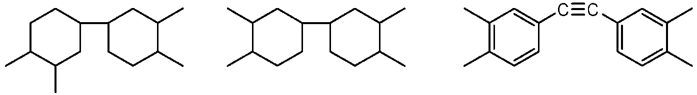 wherein the valence bonds that are not bonded to any substituents in the structural formulas are bonded to the carbonyl carbon atoms constituting the cyclic imide structures in the formula (1).

3. The heat-curable maleimide resin composition according to claim 1, wherein the anionic polymerization initiator (C) is an imidazole compound having a triazine ring.

4. The heat-curable maleimide resin composition according to claim 1, wherein the hollow inorganic filler (D) comprises one or more selected from hollow silica and hollow glass.

5. The heat-curable maleimide resin composition according to claim 4, wherein the hollow inorganic filler (D) is treated with a silane coupling agent.

6. The heat-curable maleimide resin composition according to claim 1, further comprising (E) a nonhollow inorganic filler.

7. The heat-curable maleimide resin composition according to claim 6, wherein the nonhollow inorganic filler (E) is spherical silica having an average particle size of 0.1 to 5.0 µm.

8. A bonding film comprising the heat-curable maleimide resin composition according to any one of claims 1 to 7.

9. A build-up film comprising the heat-curable maleimide resin composition according to any one of claims 1 to 7.

10. A resin-coated copper foil comprising the heat-curable maleimide resin composition according to any one of claims 1 to 7.

11. A prepreg comprising the heat-curable maleimide resin composition according to any one of claims 1 to 7.

12. A laminate comprising the heat-curable maleimide resin composition according to any one of claims 1 to 7.

13. A printed wiring board using any one of:
the bonding film according to claim 8,
the build-up film according to claim 9,
the resin-coated copper foil according to claim 10,
the prepreg according to claim 11, and
the laminate according to claim 12.
